# EUROPEAN PATENT APPLICATION

(11) **EP 1 464 441 A1**
(43) Date of publication of application: **06.10.2004**
(21) Application number: 03255337.2
(22) Date of filing: 28.08.2003
(51) Int. Cl.: B23Q 11/00, B23Q 11/08, B23K 20/12

(54) **Method for removing chips, and safety cover**

(30) Priority: 01.04.2003 JP 2003097743
(71) Applicant: Hitachi, Ltd., Chiyoda-ku, Tokyo 101-8010 (JP)
(72) Inventor: Ishida, Ryooji Hitachi, Ltd. I.P.G., Chiyoda-ku Tokyo 100-8220 (JP); Fukuyori, Kazushige Hitachi, Ltd. I.P.G., Chiyoda-ku Tokyo 100-8220 (JP)
(74) Representative: Paget, Hugh Charles Edward

(57) **Abstract**

A cutter 20 cuts the butted portion between two members 11 and 12 so as to form a groove 13 to the butted portion. 23 is an optical sensor for guiding the cutter 20 to a center of the butted portion of the two members. 21 is a cover that covers the periphery around the cutter. Chips enter the cover 21 and are accumulated therein. 31 is a fillingmaterial to be inserted to the groove 13. 33 is a pressure roller preventing the filling material from popping out of the groove 13 during friction stir welding. 41 is a friction stir welding tool for welding the members 11, 12 and the filling material 13. 51 is an air blowout nozzle for blowing air via the proximity of the cutter 20 toward the groove. 52 is another air blowout nozzle disposed at the rear of the cover for blowing air toward the groove 13.

## Description

### FIELD OF THE INVENTION

The present invention relates to a safety cover of a cutter and a method for removing chips from the safety cover of the cutter when forming a groove to (cutting) an otherwise uneven edge gap between abutted members, filling the groove with a filling material (metal) , and friction stir welding the abutted members and filling material.

### DESCRIPTION OF THE RELATED ART

As disclosed in reference document 1, Japanese Patent Laid-Open Publication No. 2001-210571, when a groove is formed by cutting a member with a cutter, chips (swarf) are generated. Generally, the chips are vacuumed and removed from the grooved surface.

However, if not vacuumed, the chips will be accumulated within a safety cover that covers the cutter, and as a result, the accumulated chips may come into contact with or may be pushed into the groove. When the chips enter the groove, it becomes difficult to insert the filling material to the groove, and as a result, welding cannot be performed.

### SUMMARY OF THE INVENTION

The object of the present invention is to remove the chips generated by the grooving process from the safety cover efficiently in order to prevent the generation of weld defects.

In order to achieve the above object, the present invention comprises, as basic method, discharging the chips generated during grooving of an object workpiece with a side cutter from a safety cover so that the chips do not accumulate inside the cover, which is enabled by the shape of the safety cover that surrounds the periphery of the side cutter.

### BRIEF DESCRIPTION OF THE DRAWINGS

FIG. 1 is a side view showing the formation according to one embodiment of the present invention;
FIG. 2 is a perspective view showing the removal of chips inside the safety cover according to FIG. 1;
FIG. 3 is a perspective view showing the removal of chips inside the formed groove according to FIG. 1; and
FIG. 4 is a perspective view showing the removal of chips inside the safety cover using a propeller.

### DETAILED DESCRIPTION OF THE PREFERRED EMBODIMENT

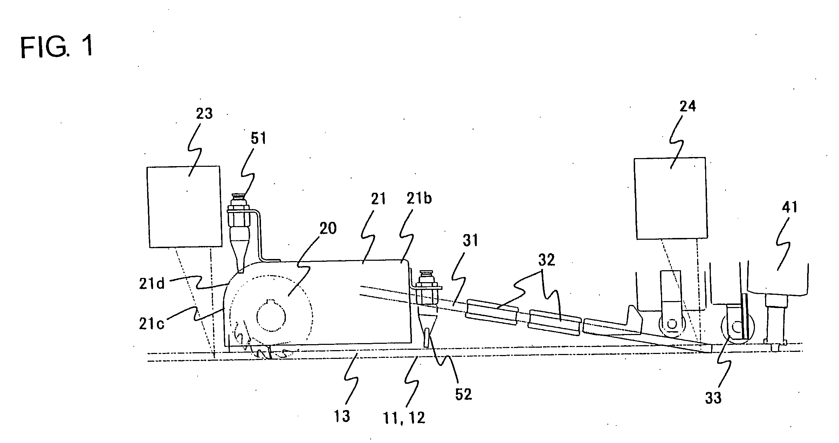

One preferred embodiment of the present invention will be explained with reference to FIGS. 1 through 3. A cutter 20 is used to cut the butted portion of two members 11 and 12, thereby forming a groove 13 at the butted area. Reference number 23 denotes an optical sensor for guiding a cutter 20 to the center of the butted portion between the two members. Reference number 21 denotes a cover that surrounds the periphery of the cutter. The chips enter the cover and are accumulated therein. Reference number 31 is a filling material to be filled in the groove 13. Reference number 32 is a roller for guiding the filling material 31 into the groove 13. Reference number 33 is a pressure roller that prevents the filling material from popping out of the groove 13 during friction stir welding. Reference number 41 denotes a friction stir welding tool. The tool is used to weld the members 11, 12 and the filling material 13 together by friction stir welding. Reference number 24 shows an optical sensor for guiding the friction stir welding tool 41 to the center of width of the fillingmaterial 31. Reference number 51 is an air blowout nozzle for blowing air toward the groove via the proximity of the cutter 20. Reference number 52 is an air blowout nozzle disposed at the rear of the cover for blowing out air toward the groove 13.

According to this arrangement, the butted portion between the members is cut with a cutter 20 so as to create a uniform gap, then the gap is filled with a fillingmaterial before joining the members together by friction stir welding. When the groove is formed by the cutter 20, the chips created through the cutting is blown away by the air discharged through the blowout nozzle 51. The chips adhered to the cutter 20 will be blown off so as not to be accumulated inside the cover. Moreover, the chips remaining inside the groove 13 are blown out of the groove 13 by the air discharged from the blowout nozzle 52. Thus, cutting can be performed continuously and the filling material 31 can be inserted to the groove 13 in a reliable manner, so friction stir welding can be carried out steadily.

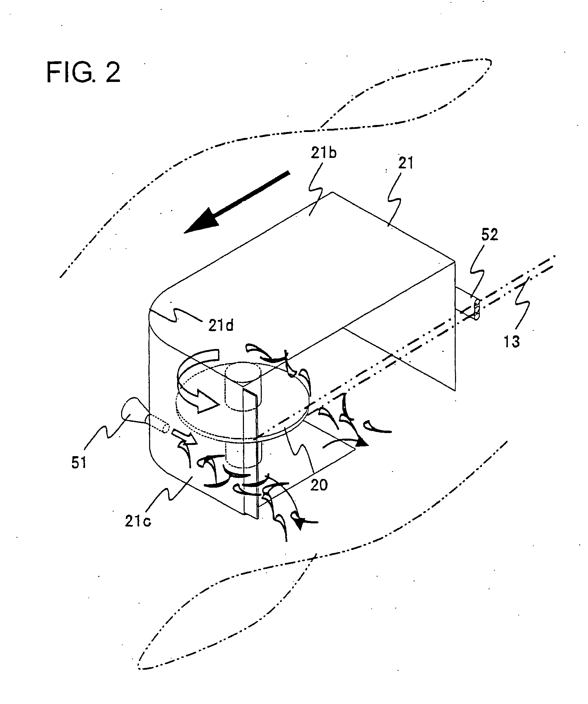

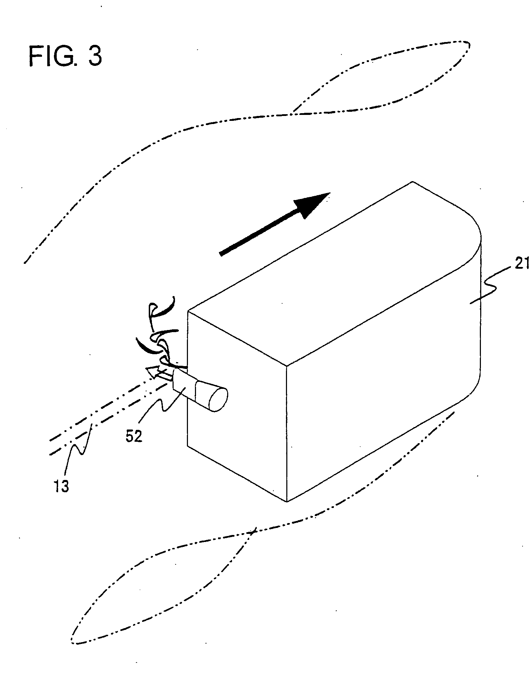

In FIGS. 2 and 3, the front end area of the cover 10 near the air blowout nozzle 51 is formed to have an arc-like curved shape. Therefore, the chips are circulated along the rotary direction of the cutter 20. Thus, the chips are blown toward the groove 13 and discharged through the gap formed between the member and the cover 21.

The members 11 and 12 are disposed horizontally, and above the butted portion between the members are disposed a cutter 20 and a cover 21. The groove 13 is disposed below the cover 21, and the lower end of the cover 21 is opened.

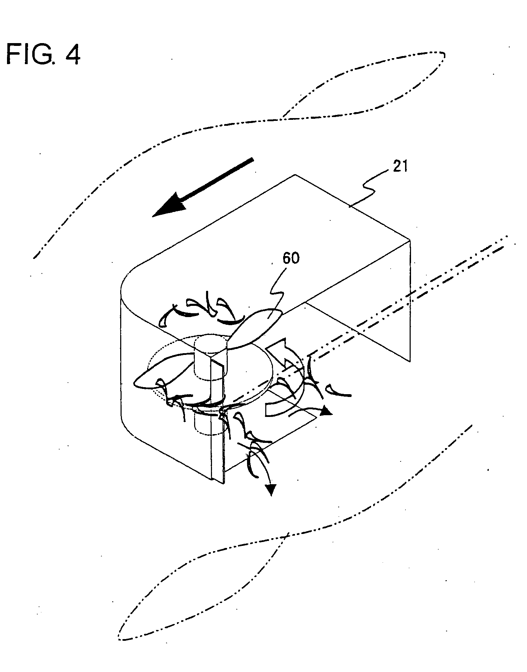

FIG. 4 shows another embodiment in which a propeller 60 is disposed to the rotary shaft of the cutter 20, in replacement of the air blowout nozzle 51, which rotates together with the cutter 20 to create air flow for discharging the chips.

## Claims

1. A method for removing chips generated when grooving an object workpiece using a side cutter, wherein said chips are discharged without being accumulated in a safety cover that covers a periphery of said side cutter due to a shape of said safety cover.

2. The method for removing chips according to claim 1, wherein the chips are circulated and discharged from said safety cover by blowing air to said side cutter along a rotating direction of said side cutter.

3. The method for removing chips according to claim 1, wherein a rubber cover is disposed at a progressing-side opening of said safety cover in order to prevent chips from adhering to and inhibiting recognition of a profile sensor.

4. The method for removing chips according to claim 1, wherein air is blown toward said groove so as to remove the chips from said groove after the grooving, thereby facilitating insertion of a filling material in an after process.

5. The method for removing chips according to claim 1, wherein said chips are removed by disposing a blade on a shaft to which said side cutter is mounted, and creating an air flow toward a direction for removing said chips using rotation of said side cutter.

6. A safety cover for covering a side cutter used for grooving a member, comprising an air blowout nozzle for blowing air to said side cutter and removing chips generated during said grooving.

7. The safety cover according to claim 6, further comprising a rubber cover disposed at a progressing-side opening of said safety cover for preventing said chips from adhering to a profile sensor disposed at the progressing-side of said safety cover.

8. The safety cover according to claim 6, further comprising a blade disposed on a shaft to which said side cutter is mounted, the rotation of said blade creating an air flow for removing said chips.
